(19) Europäisches Patentamt
European Patent Office
Office européen des brevets

(11) EP 0 899 148 A2

(12) EUROPÄISCHE PATENTANMELDUNG

(43) Veröffentlichungstag:
03.03.1999 Patentblatt 1999/09

(51) Int. Cl.⁶: **B60K 31/00**, G01S 13/93

(21) Anmeldenummer: 98114852.1

(22) Anmeldetag: 07.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 25.08.1997 DE 19736966

(71) Anmelder:
**Mannesmann VDO Aktiengesellschaft**
**60388 Frankfurt am Main (DE)**

(72) Erfinder: **Hofmeyer, Andreas**
**61350 Bad Homburg (DE)**

(74) Vertreter:
**Rassler, Andrea, Dipl.-Phys.**
**Kruppstrasse 105**
**60388 Frankfurt (DE)**

(54) **Verfahren und Anordnung zur Bestimmung eines Regelobjekts**

(57) Die Erfindung betrifft ein Verfahren zur Bestimmung eines Regelobjektes, welches sich in einer voraussichtlichen Fahrspur eines Fahrzeuges befindet, dessen Abstand zu dem Regelobjekt gemessen und auf einen vorgegebenen Sollabstand eingeregelt wird.

Ein Verfahren zur zuverlässigen Bestimmung des Regelobjektes, welches sowohl bei langsamen als auch kurzfristigen und plötzlichen Änderungen des Kurvenradius des Fahrzeuges zuverlässig arbeitet, vergleicht nachdem das Regelobjekt die Fahrspur des Fahrzeuges verlassen hat, die aktuelle Position des Fahrzeuges mit einer aus einer tatsächlich erfaßten Position des Regelobjektes abgeleiteten Projektion des Regelobjektes auf die aktuelle Position des Fahrzeuges und bei annähernder Übereinstimmung der Projektion und der aktuellen Position des Fahrzeuges wird der Abstand des Fahrzeuges weiterhin auf das Regelobjekt geregelt.

Fig. 4

EP 0 899 148 A2

**Beschreibung**

Die Erfindung betrifft ein Verfahren zur Bestimmung eines Regelobjektes, welches sich in einer voraussichtlichen Fahrspur eines Fahrzeuges befindet, dessen Abstand zu dem Regelobjekt gemessen und auf einen vorgegebenen Sollabstand eingeregelt wird sowie eine Anordnung zur Durchführung des Verfahrens.

In automatischen Geschwindigkeits- und Abstandsregelungssystemen zur Erfassung der Verkehrssituation ist es üblich, mit Hilfe Von Signalen von Gierratensensoren bzw. Querbeschleunigungssensoren eine Fahrspur des Kraftfahrzeuges vorauszusagen. Das heißt, es wird festgestellt, an welcher Stelle sich das Fahrzeug nach Ablauf eines vorgegebenen Zeitraumes aufhalten wird und welche vorausfahrenden Fahrzeuge sich im Fahrkorridor des eigenen Fahrzeuges aufhalten.

Für das abstandsgeregelte Fahren wird anhand der vom Radar ermittelten Objekte und aus der berechneten Fahrspur das Regelobjekt ermittelt. Dieses Objekt wird von einer Abstandsregeleinrichtung in Form eines Längsreglers zum Abstandsregeln verwendet.

Die Fahrspur ist dabei eine Annahme in die Zukunft, bei welcher das Fahrzeug in die Richtung fährt, die durch den ermittelten Radius vorgegeben wird. Ändert sich der Radius nicht schlagartig oder nur langsam, kann das ausgewählte Objekt gut gehalten wird.

In Grenzsituationen, wie Kurveneinfahrten oder Schlingern des Fahrzeuges, kann das Regelobjekt verloren bzw. nur kurzfristig detektiert werden.

Der Erfindung liegt somit die Aufgabe zugrunde, ein Verfahren zur zuverlässigen Bestimmung des Regelobjektes anzugeben, welches sowohl bei langsamen als auch kurzfristigen und plötzlichen Änderungen des Kurvenradius des Fahrzeuges zuverlässig regelt.

Erfindungsgemäß wird die Aufgabe dadurch gelöst, daß nachdem das Regelobjekt die Fahrspur des Fahrzeuges verlassen hat, die aktuelle Position des Fahrzeuges mit einer aus einer tatsächlich erfaßten Position des Regelobjektes abgeleiteten Projektion des Regelobjektes auf die aktuelle Position des Fahrzeuges verglichen wird und bei annähernder Übereinstimmung der Projektion und der aktuellen Position des Fahrzeuges der Abstand des Fahrzeuges weiterhin auf das Regelobjekt geregelt wird.

Der Vorteil der Erfindung besteht darin, daß die aktuelle Position des Fahrzeuges mit Informationen aus der Vergangenheit des Regelobjektes verglichen wird.

In einer Ausführung wird die Projektion aus einer Objektspur des Regelobjektes bestimmt, welche mit Hilfe der Geschwindigkeit und der Gierrate des Kraftfahrzeuges gebildet wird.

Dem Regelobjekt werden so die Eigenschaften des zu regelnden Fahrzeuges zugeordnet.

In einer Weiterbildung erfolgt die Projektion des Regelobjektes auf die aktuelle Fahrzeughöhe des Kraftfahrzeuges.

Somit ist auch beim leichten Pendeln der Fahrspur, bei welcher das vorausfahrende Fahrzeug einmal innerhalb oder außerhalb dieser Fahrspur liegt, eine zuverlässige Regelung möglich. Auch bei Fahrzeugen, die sich auf der Nachbarspur bewegen, können Irritationen infolge des falsch erfaßten Regelobjektes ausgeschlossen werden.

Auch für den Fall, daß das vorausfahrende Fahrzeug bereits in eine Kurve einfährt, während das zu regelnde Fahrzeug noch geradeaus fährt, ist eine zuverlässige Regelung möglich.

Nach der Prüfung, ob sich in der Objektspur des Regelobjektes das zu regelnde Fahrzeug befindet, weiß man, daß man bei Verlust des Fahrzeuges aus der Fahrspur weiterhin auf dieses regeln kann, da sich das Fahrzeug in der Objektspur des Regelobjektes befindet. Für jedes Regelobjekt ergibt sich somit gedanklich eine Schleppe, die es hinter sich herzieht.

In einer Weiterbildung wird der Kurvenradius des Fahrzeuges mittels eines Gierratensensors bestimmt.

Der Kurvenradius des Fahrzeuges, aus welchem die Fahrspur des Fahrzeuges vorausschauend bestimmt wird, wird alternativ dazu aus der Differenzgeschwindigkeit zweier Fahrzeugräder, insbesondere der Räder einer Achse bestimmt. Dies hat den Vorteil, daß durch die Messung der Radgeschwindigkeiten der tatsächliche Geschwindigkeitsunterschied an beiden Fahrzeugrädern in die Bestimmung des Fahrkorridors eingeht. Dieser kann somit sehr genau bestimmt werden, da die Fahrdynamik auf diese Art und Weise direkt berücksichtigt wird.

Vorteilhafterweise wird die Radgeschwindigkeit der beiden Fahrzeugräder gemessen und aus der Differenz der beiden Radgeschwindigkeiten die Gierrate des Fahrzeuges bestimmt.

Bei einer Anordnung zur Durchführung des Verfahrens ist ein Sensor, der in Fahrtrichtung des Fahrzeugs auftretende Objekte erfaßt, mit einer Sensorsignalaufbereitungsanordnung verbunden, die Abstand und Relativgeschwindigkeit der überwachten Objekte an eine Regeleinrichtung führt, welche die Fahrspur des Fahrzeuges sowie die Projektion des Regelobjektes bestimmt.

Die erfindungsgemäße Anordnung ermöglicht somit auf einfache Art und Weise die Ermittlung des imaginären Schleppobjektes. Es sind keine weiteren zusätzlichen Einrichtungen notwendig.

In einer Ausgestaltung ist der Sensor an der Vorderfront des zu regelnden Fahrzeuges zur Erfassung der vorausfahrenden Fahrzeuge angeordnet. Der Sensor arbeitet nach dem Rückstrahlprinzip und ist vorteilhaftenweise ein Radarsensor.

In einer Weiterbildung ist der Sensor, die Signalaufbereitungsanordnung sowie die Abstandsregeleinrichtung in einer baulichen Einheit an der Vorderfront des zu regelnden Fahrzeuges angeordnet.

Somit wird eine platzsparende Sensoreinheit ermöglicht, welche nur unwesentlich mehr Bauraum beansprucht als der Sensor mit integrierter Signalausweteschaltung.

Die Erfindung läßt zahlreiche Ausführungsbeispiele zu. Eines davon soll anhand der in den Figuren dargestellten Zeichnung näher erläutert werden. Es zeigt:

    Figur 1: Anordnung des Abstandsregelsystems am Kraftfahrzeug,
    Figur 2: prinzipieller Aufbau des Abstandsregelsystems,
    Figur 3: Anordnung zur Bestimmung des Fahrkorridors des Kraftfahrzeuges,
    Figur 4: Erfassung des Regelobjektes,
    Figur 5: Darstellung des Schleppobjektes.

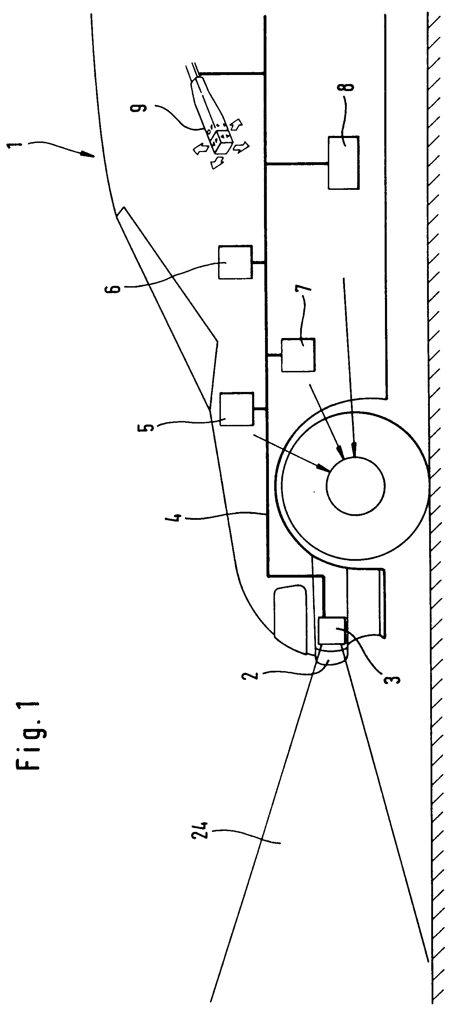

In Figur 1 ist an der Stoßstange 2 eines Kraftfahrzeuges 1 ein automatisches Geschwindigkeits- und Abstandsregelsystem 3 zur Einhaltung des Sicherheitsabstandes von Fahrzeugen angeordnet. Bei Annäherung des geregelten Fahrzeuges an ein langsameres Fahrzeug wird automatisch der Abstand und die Geschwindigkeit zum vorausfahrenden Fahrzeug reguliert. Ist die Fahrspur wieder frei, beschleunigt das System das Fahrzeug auf die zuvor eingestellte Wunschgeschwindigkeit.

Das Ein-/Ausschalten des Geschwindigkeits- und Abstandsregelsystems 3 erfolgt per Bedienhebel 9. Auch die Wunschgeschwindigkeit des Fahrzeuges wird mit Hilfe des Bedienhebels 9 eingestellt. Die vom Fahrer gewünschte Reisegeschwindigkeit wird so gespeichert, erhöht oder verringert.

Über ein Bussystem 4 ist das automatische Geschwindigkeits- und Abstandsregelsystem 3 mit der Motorsteuerung 5, der Bremse 7 und dem Getriebe 8 verbunden. Elektronische Befehle regulieren den Abstand und die Geschwindigkeit zum vorausfahrenden Fahrzeug. Über eine Anzeigeeinheit 6, die ebenfalls von dem Geschwindigkeits- und Abstandsregelsystem 3 über das Bussystem 4, vorzugsweise einem CAN-Bus, angesteuert wird, wird die aktuelle Geschwindigkeit und auch der Abstand zum vorausfahrenden Fahrzeug angezeigt.

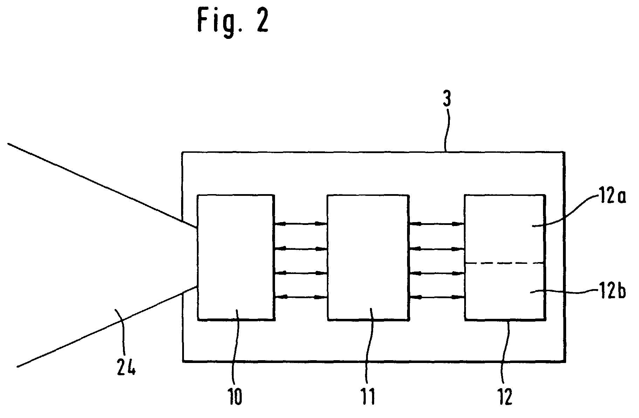

Wie in Figur 2 dargestellt, bildet das automatische Geschwindigkeits-und Abstandsregelsystem 3 eine bauliche Einheit zwischen Sensor 10, Sensorsignalaufbereitungsanordnung 11 und dem Abstandsregelsystem 12.

Das Abstandsregelsystem 12 weist dabei eine Einrichtung 12a zur Bestimmung der Fahrspur des Fahrzeuges und der Objektspur des Vergleichsobjektes sowie einen Längsregler 12b auf, der den Abstand zu einem Regelobjekt herstellt.

Der Sensor 10 ist dabei ein Radar- oder Lasersensor, der in regelmäßigen Abständen, z.B. alle 60 ms in Fahrtrichtung des Fahrzeuges Signale aussendet, welche von den Fahrzeugen, die sich im Signalstrahl befinden, reflektiert werden. Aus diesen zurückgesendeten Signalen wird von der Signalaufbereitungsschaltung 11 der Abstand und die Relativgeschwindigkeit der vorausfahrenden Fahrzeuge bestimmt. Diese Meßergebnisse werden von der Signalaufbereitungsanordnung 11 an das Abstandsregelsystem 12 weitergegeben.

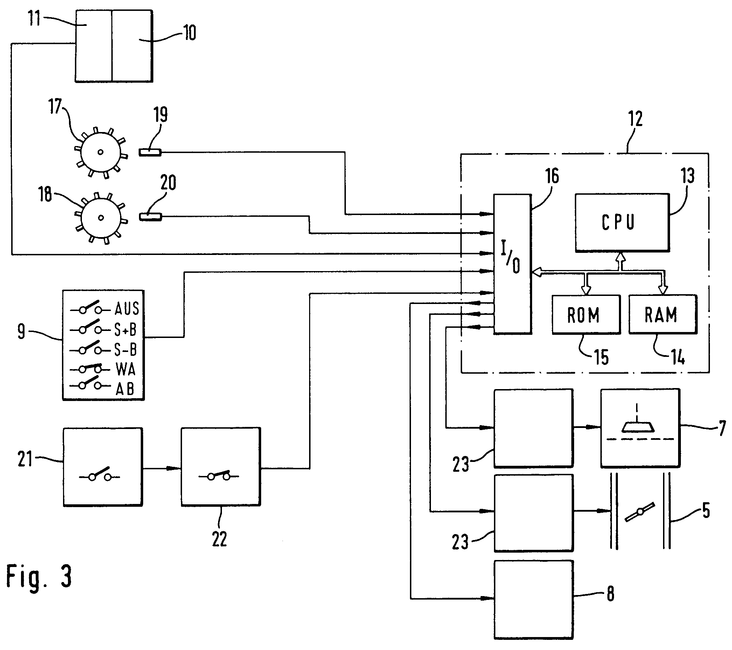

Wie in Figur 3 dargestellt, besteht das Abstandsregelsystem 12 aus einem leistungsstarken Mikrorechner 12, der wiederum aus einer zentralen Recheneinheit 13, einem Arbeitsspeicher 14, einem Festwertspeicher 15 sowie einer Ein-/Ausgabeeinheit 16 aufgebaut ist. Die Ein-/Ausgabeeinheit 16 erhält dabei vom der Sensorsignalaufbereitungsanordnung 11 wie schon beschrieben die Informationen über den Abstand und die Relativgeschwindigkeit der vorausfahrenden Fahrzeuge. Die Aufgaben der Fahrspur- und Objektspurbestimmung sowie der Längsregelung werden von diesem Mikrorechner übernommen.

Am Fahrzeug selbst sind Inkrementscheiben 17 und 18 an den jeweils beiden nicht weiter dargestellten Vorderrädern angeordnet. Den Inkrementscheiben 17, 18 gegenüberliegend sind Drehzahlsensoren 19, 20 angeordnet. Die von den Drehzahlsensoren 19, 20 detektierten Drehzahlsignale werden ebenfalls über die Ein-/Ausgabeeinheit 16 dem Mikrorechner 12 zugeführt. Der Mikrorechner 12 berechnet aus dem vom Sensor 10 gelieferten Signalen (Abstandssignal und Relativgeschwindigkeitssignal) und mit Hilfe der Radgeschwindigkeiten die Geschwindigkeitsdifferenz zwischen beiden Fahrzeugen und ermittelt aus diesen den sicheren Mindestabstand. Wird diese unterschritten, warnt das System bei aktivierter Warnfunktion den Fahrer.

Ist der Abstandsbetrieb vom Fahrer eingeschaltet, wird der Abstand zum vorausfahrenden Fahrzeug automatisch auf einen wählbaren Abstand engeregelt. Per Tastendruck auf den Bedienschalter 9 wird, wie bereits erläutert, eine gewünschte Geschwindigkeit und/oder der gewünschte Abstand eingestellt und gespeichert und vom System aufrechterhalten.

Bei Annäherung an ein langsameres Fahrzeug übernimmt der Mikrorechner 12 durch automatisches Schließen der Drosselklappe 5 eine Verringerung der Fahrzeuggeschwindigkeit und regelt so den eingestellten Sollabstand zum vorausfahrenden Fahrzeug, wobei der Sollabstand immer größer/gleich dem gesetzlich vorgegebenen Sicherheitsabstand ist. Neben dem automatischen Schließen der Drosselklappe 5 ist auch eine Einwirkung auf die Bremse 7 und/oder eine Ansteuerung der Getriebesteuerung 8 zur Verringerung der Fahrgeschwindigkeit möglich. Die Ansteuerung der Drosselklappe 5, der Bremse 7 oder des Getriebes 8 erfolgt dabei über je eine elektrische Endstufe 23. Ist die Fahrspur wieder frei, beschleunigt der Abstandsregler 12 das Fahrzeug auf die eingestellte Maximalgeschwindigkeit. Bei einer Fahrzeugvorausfahrt ist immer die Abstandsregelung aktiv. Diese Abstandsregelung ist nicht auf Verbrennungsmotoren begrenzt.

Weiterhin ist der Mikrorechner 12 mit Schaltern der Fahrzeugbremse 21 bzw. der Fahrzeugkupplung 22 verbunden. Werden diese vom Fahrer über das Kupplungs- und Bremspedal betätigt, bewirken sie im Normalbetrieb ein Abschalten der Regelung.

Im Mikroprozessor 12 bildet der Längsregler 12b den Vergleich zwischen einem Soll- und Istwert eines in der Software abgelegten Regelungskonzeptes. Ist man im Regelbereich, so wird vom Mikrorechner ein Ausgangssignal ausgegeben, das vom Regelungskonzept ermittelt wird.

Aus den von den Drehzahlsensoren 19, 20 erfaßten Drehzahlsignalen ermittelt die im Mikroprozessor 12 gebildete Einrichtung zur Fahr- und Objektspurbestimmung 12a die Gierrate des Kraftfahrzeuges. Die Gierrate bestimmt sich wie folgt:

$$\dot{\varphi} = \frac{\Delta v_{VR}}{s + v^2 \cdot k}$$

wobei

$\Delta v_{VR}$     die Geschwindigkeitsdifferenz der Vorderräder des Kraftfahrzeuges,

s     die Spurbreite zwischen den Vorderrädern,

v     die Fahrzeuggeschwindigkeit,

k     der Dynamikkorrekturfaktor ist.

Mit Hilfe der so bestimmten Gierrate wird nun die Fahrspur 25 des Kraftfahrzeuges 1 aus dem Kurvenradius

$$R = \frac{v_R}{\dot{\varphi}}$$

berechnet.

Der von jedem Vorderrad gefahrene Radius bestimmt sich aus dem Quotienten der Radgeschwindigkeit $v_R$ durch die Gierrate $\dot{\varphi}$.

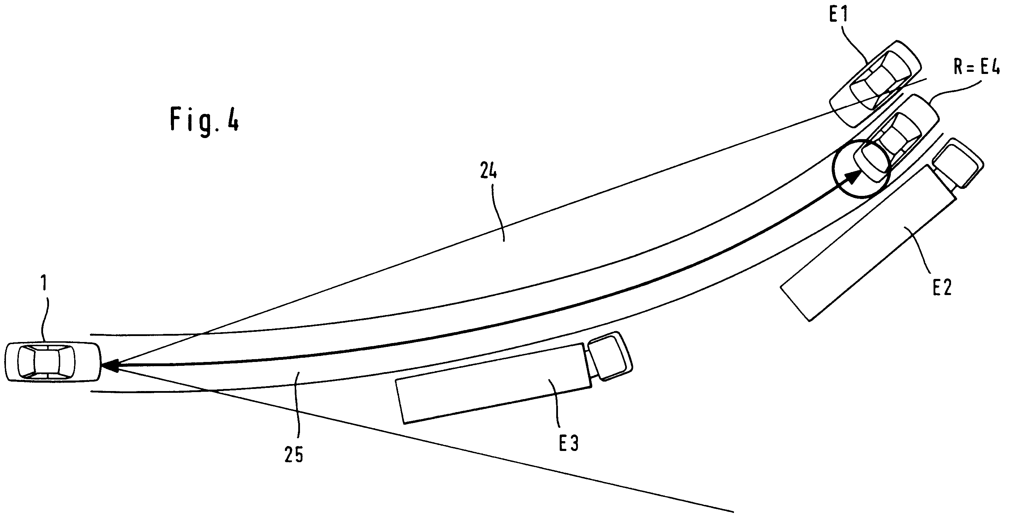

Wie in Figur 4 dargestellt, erfaßt das Fahrzeug 1 mit Hilfe des ausgesendeten Radarstrahles 24 mehrere Fahrzeuge E1, E2, E3, E4. Die Sensorauswerteelektronik 11 ermittelt von diesen vier Objekten E1, E2, E3, E4 den Abstand zum zu regelnden Fahrzeug 1 in Form der Positionskoordinaten x, y und die Relativgeschwindigkeit jedes Fahrzeuges zum Kraftfahrzeug 1. Weiterhin wird überwacht, ob das detektierte Objekt E1, E2, E3, E4 bei jeder Messung wieder im Radarstrahl erfaßt wird. Ist dies nicht der Fall, wird es bei der Regelung nicht berücksichtigt.

Nach der Gierratenbestimmung wird die Fahrspur 25 bestimmt. Aufgrund des Regelalgorithmus wurde das Fahrzeug E4 als Regelobjekt ausgewählt.

Es wird nun geprüft, ob sich das Objekt E4 auf der voraussichtlichen Fahrspur 25 des Kraftfahrzeuges 1 befindet. Es wird also festgestellt, ob sich die Koordinaten x, y des Objektes E4 innerhalb der Fahrspur 25 befinden. Ist dies der Fall, wird auf dieses Objekt geregelt.

Befindet sich das Regelobjekt E4 nicht im Fahrschlauch 25, wird festgestellt, ob das Kraftfahrzeug 1 über die gleiche Stelle fährt wie das Regelobjekt E4.

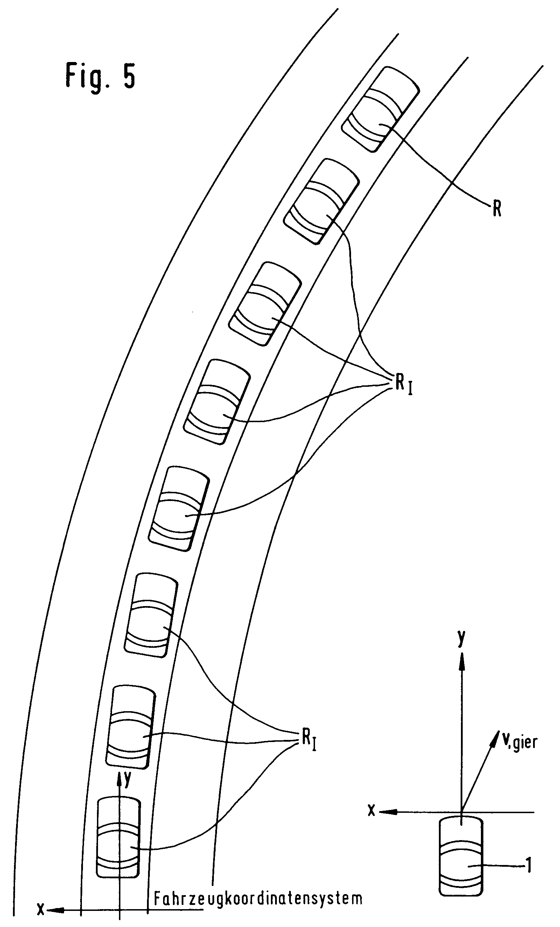

Zu diesem Zweck wird eine Objektspur vom Mikrorechner 12 bestimmt. Die Objektspur ist dabei die Spur, die das vorausfahrende Regelobjekt R unter bestimmten Voraussetzungen gefahren wäre. Die Objektspur enthält dabei verschiedene imaginäre Positionen $x_I$, $y_I$ des Regelobjektes R. Diese Positionen $x_I$, $y_I$ sollen durch die imaginären Objekte RI in Figur 5 dargestellt werden.

In Figur 5 ist eine solche Objektspur des Regelobjekts R dargestellt.

Der Abstandsregler 12 des Kraftfahrzeuges 1 ermittelt die Objektspur des vorausfahrenden Regelobjektes R anhand der Geschwindigkeit und der Gierrate des zu regelnden Kraftfahrzeuges 1. Für dieses Regelobjekt R ergibt sich gedanklich eine Schleppe von imaginären Positionen, die es ausgehend von seiner tatsächlich durch den Radarsensor erfaßten Position unter der Voraussetzung überfährt, daß es dieselbe Geschwindigkeit v und dieselbe Gierrate $\dot{\varphi}$ wie das zu regelnde Kraftfahrzeug 1 aufweist.

Das Regelobjekt R zieht quasi die Schleppe hinter sich her, da auch das Regelobjekt R sich weiterbewegt.

Verläßt nun das Regelobjekt R die Fahrspur des Kraftfahrzeuges 1, wird die Position des imaginären Objektes $R_i$ mit der aktuellen Position des Fahrzeuges 1 verglichen, das sich auf derselben Höhe wie das Fahrzeug 1 befindet. Das heißt, bei gleichen y-Koordinaten des Fahrzeuges 1 und des imaginären Objektes $E_i$ werden die x-Koordinaten beider Objekte 1, $R_I$ verglichen. Stimmen die x-Koordinaten überein, befindet sich das zu regelnde Fahrzeug 1 auf der Objektspur des Regelobjektes R. Auch wenn dieses nicht vom Radarsensor 11 erfaßt wird, wird dieses Regelobjekt R weiter verwendet.

**Patentansprüche**

1. Verfahren zur Bestimmung eines eines Regelobjektes, welches sich in einer voraussichtlichen Fahrspur eines Fahrzeuges befindet, dessen Abstand zu dem Regelobjekt gemessen und auf einen vorgegeben Sollabstand eingeregelt wird, **dadurch gekennzeichnet,** daß nachdem das Regelobjekt die Fahrspur des Fahrzeuges verlassen hat, die aktuelle Position des Fahrzeuges mit einer aus einer tatsächlich erfaßten Position des Regelobjektes abgeleiteten Projektion des Regelobjektes auf die aktuelle Position des Fahrzeuges verglichen wird und bei annähernder Übereinstimmung der Projektion und der aktuellen Position des Fahrzeuges der Abstand des Fahrzeuges weiterhin auf das Regelobjekt geregelt wird.

2. Verfahren nach Anspruch 1, **dadurch gekennzeichnet,** daß die Projektion aus einer Objektspur des Regelobjektes bestimmt wird, welche mit Hilfe der Geschwindigkeit und der Gierrate des Kraftfahrzeuges gebildet wird.

3. Verfahren nach Anspruch 1 oder 2, **dadurch gekennzeichnet,** daß die Projektion des Regelobjektes auf die aktuelle Fahrzeughöhe des Kraftfahrzeuges erfolgt.

4. Verfahren nach Anspruch 1, **dadurch gekennzeichnet,** daß die Fahrspur des Fahrzeuges vorausschauend mit Hilfe der Eigengeschwindigkeit und der Gierrate bestimmt und abgespeichert wird.

5. Verfahren nach Anspruch 4, **dadurch gekennzeichnet,** daß aus der von einem Gierratensensor gemessenen Gierrate des Fahrzeuges die Fahrspur des Fahrzeuges bestimmt wird.

6. Verfahren nach Anspruch 4, **dadurch gekennzeichnet,** daß die Fahrspur des Fahrzeuges über den Kurvenradius bestimmt wird, der aus der Differenzgeschwindigkeit zweier Fahrzeugräder, insbesondere der Räder einer Achse, bestimmt wird.

7. Verfahren nach Anspruch 6, **dadurch gekennzeichnet,** daß die Radgeschwindigkeit der beiden Fahrzeugräder gemessen wird und aus der Differenz der beiden Radgeschwindigkeiten die Gierrate des Fahrzeuges bestimmt wird.

8. Anordnung zur Durchführung des Verfahrens nach Anspruch 1, **dadurch gekennzeichnet,** daß ein Sensor die in Fahrtrichtung des Fahrzeuges auftretenden Objekte überwacht, eine mit dem Sensor verbundene Sensorsignalverarbeitungsanordnung den Abstand und die Relativgeschwindigkeit der überwachten Objekte an eine Abstandsregeleinrichtung führt, die die Projektion des Fahrzeuges bestimmt und den Abstand zum Regelobjekt einstellt.

9. Anordnung nach Anspruch 8, **dadurch gekennzeichnet,** daß der Sensor an der Vorderfront des Fahrzeuges zur Überwachung des vorausfahrenden Regelobjektes angeordnet ist.

10. Anordnung nach Anspruch 8 oder 9, **dadurch gekennzeichnet,** daß der Sensor nach dem Echoprinzip arbeitet.

11. Anordnung nach Anspruch 10, **dadurch gekennzeichnet,** daß der Sensor ein Radarsensor ist.

12. Anordnung nach Anspruch 8 oder 9, **dadurch gekennzeichnet,** daß der Sensor, die Signalaufbereitungsanordnung sowie die Abstandsregeleinrichtung eine bauliche Einheit bilden.

Fig. 1

# Fig. 2

Fig. 3

EP 0 899 148 A2

Fig. 4

E1

R = E4

24

E2

1

25

E3

EP 0 899 148 A2

# Fig. 5

R

R$_I$

R$_I$

y

v,gier

x

1

y

x

Fahrzeugkoordinatensystem